(19) Europäisches Patentamt
European Patent Office
Office européen des brevets

(11) Veröffentlichungsnummer: **0 447 668 A2**

# (12) EUROPÄISCHE PATENTANMELDUNG

(21) Anmeldenummer: **90125210.6**

(22) Anmeldetag: **21.12.90**

(51) Int. Cl.5: **C08L 81/02**, C08K 5/09, C08K 5/15, C08K 7/14, C08J 5/04

(30) Priorität: **22.03.90 DE 4009179**

(43) Veröffentlichungstag der Anmeldung: **25.09.91 Patentblatt 91/39**

(84) Benannte Vertragsstaaten: **BE DE FR GB IT**

(71) Anmelder: **BAYER AG**

**W-5090 Leverkusen 1 Bayerwerk(DE)**

(72) Erfinder: **Köhler, Burkhard, Dr.**
**Mündelheimer Strasse 94**
**W-4150 Krefeld(DE)**
Erfinder: **Wehnert, Wolfgang, Dr.**
**Bodelschwinghstrasse 14**
**W-4150 Krefeld(DE)**
Erfinder: **Uerdingen, Walter, Dr.**
**Humperdinckstrasse 41**
**W-5090 Leverkusen(DE)**
Erfinder: **Franke, Joachim, Dr.**
**An der Ruthen 2**
**W-5000 Köln 80(DE)**

## (54) Mischungen aus Polyarylensulfiden, Epoxiden, Säureanhydriden, Glasfasern und gegebenenfalls weiteren Füllstoffen.

(57) Die Erfindung betrifft Mischungen aus Polyarylensulfiden, Epoxiden, Säureanhydriden, Glasfasern und gegebenenfalls weiteren Füllstoffen. Die Mischungen zeichnen sich durch gute mechanische Eigenschaften aus.

EP 0 447 668 A2

Die Erfindung betrifft Mischungen aus Polyarylensulfiden, Epoxiden, Säureanhydriden, Glasfasern und gegebenenfalls weiteren Füll(zusatz)stoffen. Die Mischungen zeichnen sich durch gute mechanische Eigenschaften aus.

Polyarylensulfide (PAS) sind bekannt (z.B. US-A 3 354 129, EP-A 171 021). Sie sind inerte, hochtemperaturbeständige Thermoplaste, die einen hohen Füllgrad, z.B. mit Glasfasern und/oder anderen anorganischen Füllstoffen erlauben. Der Einsatz dieser Polymeren, insbesondere des Polyphenylensulfids (PPS) nimmt in Bereichen zu, die bisher Duroplasten vorbehalten waren.

PAS hat unbefriedigende mechanische Eigenschaften für einige Anwendungen im Spritzgußbereich. Insbesondere sind Randfaserdehnung und Schlagzähigkeit für die Praxis nicht ausreichend. Es hat sich daher als Vorteil erwiesen, PAS z.B. durch Abmischung mit anderen Thermoplasten in den genannten Eigenschaften zu verbessern, z.B. Mischungen aus Maleinsäureanhydrid-gepfropften, hydrierten Dienkautschuken, Epoxiden und PAS (JP-A 63-118369). Die großen Mengen an verwendeten Maleinsäureanhydrid-gepfropften Polyolefinen mit niedriger Glastemperatur verbessern die Zähigkeit, jedoch läßt sich die Biegefestigkeit nicht wesentlich steigern.

Für bestimmte Anwendungsgebiete ist das Eigenschaftsprofil derartiger Abmischungen jedoch nicht immer ganz befriedigend.

Es wurde nun gefunden, daß Abmischungen von Polyphenylensulfid (PPS) mit Epoxiden, Säureanhydriden, Glasfasern und gegebenenfalls weiteren Zusätzen sich durch ihre mechanischen Eigenschaften auszeichnen.

Gegenstand der Erfindung sind daher Mischungen aus

A) 89,9 bis 20 Gew.-% Polyarylensulfiden, vorzugsweise Polyphenylensulfid,

B) 0,1 bis 35 Gew.-%, vorzugsweise, 0,2 bis 5 Gew.-% eines Epoxids der Formel (I)

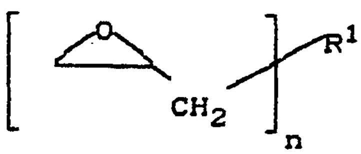

(I),

worin

$R^1$ für einen mindestens divalenten organischen offenkettigen aliphatischen Rest mit 1 bis 24 C-Atomen, oder cyclischen, aliphatischen Rest mit 3 bis 14 C-Atomen, aromatischen Rest mit 6 bis 24 C-Atomen, einen heterocyclischen Rest mit bis zu 3 Stickstoffatomen und bis zu einem Sauerstoffatom, wobei diese Strukturelemente im Rest $R^1$ vereinigt sein können, steht der über ein Sauerstoff- oder Stickstoffatom an den Glycidylrest gebunden ist und

n für eine Zahl größer gleich 2 steht, vorzugsweise für die Zahl 2 oder 3 steht,

C) 0,01 - 2 Gew.-%, vorzugsweise 0,1 - 1 Gew.-% eines Säureanhydrids der Formel (II)

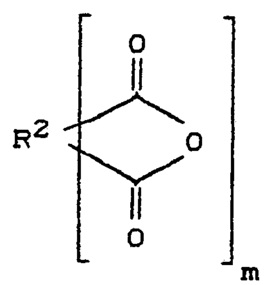

(II),

in welcher

$R^2$ für einen $C_6$-$C_{14}$-cycloaliphatischen oder $C_6$-$C_{24}$-aromatischen Rest, bevorzugt $C_6$-$C_{24}$-aromatischen Rest, steht und

m für die Zahl 1, 2, 3 oder 4, bevorzugt 2 steht,

D) 10 bis 79,9 Gew.-%, vorzugsweise
30 bis 60 Gew.-% Glasfasern,

die vorzugsweise mit Polyurethanfilmbildnern und Aminosilan- oder Epoxysilanhaftvermittlern, besonders bevorzugt Aminosilanhaftvermittlern geschlichtet sind und gegebenenfalls bis zu 300 Gew.-%, bezogen auf PAS anderen mineralischen oder organischen Füll- und Verstärkungsstoffen und/oder anorganischen oder organischen Hilfsstoffen.

Beispiele für erfindungsgemäße Epoxide der Formel (I) sind Bisglycidyl-Bisphenol A, Bisglycidylterephthalat, Bisglycidyltetrahydrophthalat, Triglycidyl-isocyanurat, Triglycidylurazol, Glycidylether von Phenol-Formaldehydkondensaten.

Die verwendeten Epoxide sind bekannt und auch handelsüblich (z.B. Lekutherm®), z.B. Römpps Chemie Lexikon, Bd. 2, Seite 1158, 8. Auflage, Franck'sche Verlagshandlung, Stuttgart 1981, und dort zitierte Lit.

Die Säureanhydride der Formel (II) sind bekannt und auch handelsüblich (z.B. Benzophenontetracarbonsäuredianhydrid), Chemie (INZ oder Aldrich, Katalog 1988-89, Bestellnummer 26, 246-3).

Erfindungsgemäß werden handelsübliche, bevorzugt mit Polyurethanfilmbildnern und Aminosilan- oder Epoxysilanhaftvermittlern geschlichtete Glasfasern eingesetzt. Sie haben einen Durchmesser von 1 bis 20 $\mu$m, vorzugsweise von 5 bis 13 $\mu$m. Es Können Endlosglasfasern eingesetzt werden und/oder Herstellungsverfahren gewählt werden, bei denen die Länge der Fasern in der fertigen Abmischung 0,05 bis 10 mm, vorzugsweise 0,1 bis 2 mm, beträgt. Es können auch Endlosfasern (Rovings) eingesetzt werden in Verfahren zur Herstellung von endlosverstärktem Unidirektionalverbund.

Gegebenenfalls können auch - insbesondere teilweise - anstelle der Glasfasern handelsübliche Glaskugeln eingesetzt werden, z.B. Ballotini-Glaskugeln.

Als weitere, mineralische Füllstoffe oder Zusatzstoffe seien Glimmer, Talkum, Quarzmehl, Metalloxide und Sulfide, z.B. $TiO_2$, ZnO, ZnS, Graphit, Ruß, Fasern, z.B. aus Quarz oder Kohlenstoff, Carbonate wie z.B. $MgCO_3$, $CaCO_3$, oder Sulfat wie z.B. $CaSO_4$, $BaSO_4$, genannt.

Als weitere übliche Zusatzstoffe können Pigmente, Entformungsmittel, E-Wachse, Fließhilfsmittel, Nucleierungsmittel oder Stabilisatoren eingesetzt werden.

Es können 0 bis 300 Gew.-%, bezogen auf PAS, Füll- und Zusatzstoffe eingesetzt werden.

Die erfindungsgemäßen Mischungen Können auf übliche Art und Weise durch Extrusion hergestellt werden.

Die erfindungsgemäßen Mischungen Können auf übliche Weise zu Formteilen, Halbzeug, Leiterplatten, Fasern, Folien, Profilen usw. verarbeitet werden. Die erfindungsgemäßen Mischungen können generell in vorteilhafter Weise dort eingesetzt werden, wo thermoplastisch verarbeitbare Massen eingesetzt werden.

## Beispiele

Die Herstellung der erfindungsgemäßen Mischungen erfolgte auf einem Doppelwellenextruder ZSK 32 von Werner und Pfleiderer bei 320° C.

Das verwendete PPS wies eine Schmelzviskosität von 45 Pas (360° C), Schubspannung = 1000 $s^{-1}$ auf und wurde nach EP-A 171 021 hergestellt.

Als glasfasern wurde die mit Polyurethanfilmbildner und Aminosilanhaftvermittler geschlichtete Schnittglasfaser Bayer CS 7916® zu 40 Gew.-% eingesetzt.

Die Mischungen wurden granuliert und zu Prüfstäben (z.B. der Maße 80 x 10 x 4 mm) verspritzt. Diese wurden hinsichtlich Biegefestigkeit, Randfaserdehnung, Biegemodul und Schlagzähigkeit $a_n$ (reversed notched ISO 180 untersucht.

## Vergleichsbeispiel

Gemischt wurden 60% PPS mit 40% Glasfaser.

## Beispiel 1

Gemischt wurden 59% PPS mit 40% Glasfaser, 0,5 Triglycidylisocyanurat und 0,5% Benzophenontetracarbonsäuredianhydrid.

## Beispiel 2

Gemischt wurden 58% PPS mit 40% Glasfaser, 1,5% Triglycidylisocyanurat und 0,5% Benzophenontetracarbonsäuredianhydrid.

Folgende Tabelle faßt die mechanischen Eigenschaften zusammen.

| Beispiel | Biegefestigkeit (MPa) | Randfaserdehnung (%) | Biegemodul (MPa) | Izod-Schlagzähigkeit ($kJ/m^2$) |
|---|---|---|---|---|
| Vergleich | 250 | 1,9 | 13.000 | 30 |
| 1 | 308 | 2,4 | 13.100 | 44 |
| 2 | 304 | 2,6 | 12.500 | 44 |

## Patentansprüche

**1.** Mischungen aus

A) 89,9 bis 20 Gew.-% Polyarylensulfiden

B) 0,1 bis 35 Gew.-%, eines Epoxids der Formel (I)

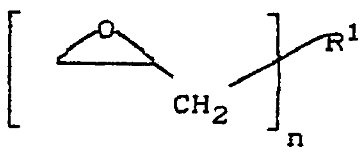

(I),

worin

$R^1$ für einen mindestens divalenten organischen Rest steht, der über ein Sauerstoff- oder Stickstoffatom an den Glycidylrest gebunden ist und

n für eine Zahl größer gleich ≧ 2 steht,

C) 0,01 - 2 Gew.-%, eines Säureanhydrids der Formel (II)

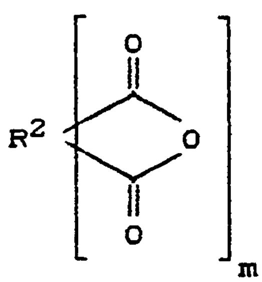

(II),

wobei

$R^2$ für einen $C_6$-$C_{14}$ cycloaliphatischen oder $C_6$ -$C_{24}$-aromatischen Rest, der über ein Sauerstoff- oder Stickstoffatom an den Glycidylrest gebunden ist steht und

m für die Zahl 1, 2, 3 oder 4 steht,

D) 10 bis 79,9 Gew.-%, Glasfasern und gegebenenfalls anderen mineralischen oder organischen Füll-und Verstärkungsstoffen und/oder anorganischen oder organischen Hilfsstoffen.

**2.** Verwendung der Mischungen nach Anspruch 1 zur Herstellung geformter Körper.